# EUROPÄISCHE PATENTANMELDUNG

(11) **EP 1 501 030 A1**
(43) Veröffentlichungstag der Anmeldung: **26.01.2005**
(21) Anmeldenummer: 04014522.9
(22) Anmeldetag: 21.06.2004
(51) Int. Cl.: G06F 17/60

(54) **Einrichtung für den Import eines maschinenlesbaren Datenmodells, insbesondere medizinischer Leitlinien in ein Workflow-Mangement-System**

(30) Priorität: 24.07.2003 DE 10333797
(71) Anmelder: SIEMENS AKTIENGESELLSCHAFT, 80333 München (DE)
(72) Erfinder: Abraham-Fuchs, Klaus, 91058 Erlangen (DE); Rumpel, Eva, Dr., 91052 Erlangen (DE); Tiffe, Sven, 1020 Wien (AT)

(57) **Zusammenfassung**

Die vorliegende Erfindung betrifft eine Einrichtung zur Adaption eines maschinenlesbaren Datenmodells, insbesondere medizinischer Leitlinien (7a-c), für den Import in ein klinisches Workflow-Management-System (2), die im Wesentlichen ein Abbildungssystem bestehend aus einer Arbeitsschritt-Datenbank (6) mit einer hierarchischen Gliederung von Arbeitsschritten und einem Abbildungs-Modul (11), das Arbeitsschritte des eingelesenen Datenmodells, die zu einer anderen hierarchischen Ebene gehören als die im System (2) verwendete Ebene, durch Abfrage der Arbeitsschritt-Datenbank (6) auf Arbeitsschritte der hierarchischen Ebene des Systems (2) abbildet, und/oder ein Zuordnungssystem bestehend aus einer Ressourcen-Datenbank (5), die eine Zuordnung generischer Ressourcen-Bezeichnungen im Datenmodell zu konkreten Ressourcen der Institution enthält, und einem Zuordnungs-Modul (12) umfasst, das generische Ressourcen-Bezeichnungen des eingelesenen Datenmodells durch Abfrage der Ressourcen-Datenbank (5) in konkrete Ressourcen der Institution übersetzt. Mit der vorliegenden Einrichtung ist ein automatisierter, Computer-gestützter Import insbesondere von medizinischen Leitlinien in klinische Workflow-Management-Systeme mit verringertem Zeit- und Arbeitsaufwand möglich.

## Beschreibung

Einrichtung für den Import eines maschinenlesbaren Datenmodells, insbesondere medizinischer Leitlinien, in ein Workflow-Management-System

Die vorliegende Erfindung betrifft eine Einrichtung zur Adaption eines maschinenlesbaren Datenmodells, insbesondere medizinischer Leitlinien, für den Import in ein klinisches Workflow-Management-System einer Institution.

In den letzten Jahren gewinnen im Bereich medizinischer Dienstleistungen zunehmend so genannte medizinische Leitlinien an Bedeutung. Diese Leitlinien sind Handlungs- und Entscheidungsempfehlungen an das medizinische Personal, insbesondere den Arzt, die von übergeordneten und allgemein anerkannten Gremien der Ärzteschaft in einem breiten Konsens erarbeitet wurden.

Parallel hierzu finden in den medizinischen Institutionen, wie beispielsweise Kliniken oder auch Arztpraxen, klinische Informationssysteme ständig breitere Anwendung, die auch eine automatisierte Unterstützung des klinischen Arbeitsablaufes mit Hilfe so genannter Workflow-Management-Systeme erlauben. Klinische Abläufe werden hierbei in maschinenlesbare Datenmodelle abgebildet und der gesamte Arbeitsfluss durch ein Computer-Netzwerk auf Basis dieser Datenmodelle unterstützt, überwacht und dokumentiert. Ein Beispiel für ein derartiges Workflow-Management-System ist das Produkt SOARIAN® der Fa. Siemens AG Medical Solutions. Unter dem auf diesem Gebiet üblichen Begriff Workflow ist hierbei der Arbeitsablauf zu verstehen, d.h. eine sequentielle, parallele oder bedingte Abfolge von Arbeitsschritten, so genannten Action-Steps, der bei Eintritt eines bestimmten Ereignisses oder bei Vorliegen bestimmter Umstände vom klinischen Personal eingehalten werden sollte. In einem Workflow-Management-System werden die Arbeitsabläufe in einzelne Arbeitsschritte zerlegt, verantwortliche Personen und notwendige Ressourcen zugeordnet und erforderliche Daten automatisiert weitergeleitet und bereitgestellt. Bei Entscheidungsknoten im Workflow wird mittels wissensbasierter Expertensysteme elektronische Entscheidungsunterstützung angeboten. Als Ressourcen werden in diesem Zusammenhang Geräte, beispielsweise EKG-Gerät oder CT-Gerät, Personen, beispielsweise Facharzt oder Pflegepersonal, oder Infrastruktur, wie beispielsweise die Intensivstation, bezeichnet, die zur Durchführung eines Arbeitsschrittes notwendig sind. Im maschinenlesbaren Datenmodell eines derartigen Workflow-Management-Systems sind weiterhin jedem Arbeitsschritt Output-Daten und Input-Daten zugeordnet. Input-Daten sind die für die Durchführung eines Arbeitsschrittes erforderlichen Ausgangsdaten. Output-Daten werden als Ergebnis eines vollständig ausgeführten Arbeitsschritts erhalten.

Die zunehmende Bedeutung medizinischer Leitlinien macht es erforderlich, diese auch in elektronisch implementierte Workflow-Management-Systeme der einzelnen Institutionen aufzunehmen. Die medizinischen Leitlinien sind hierbei in einigen Fällen bereits als maschinenlesbares Datenmodell aufbereitet, d.h. dass der zur Durchführung der Leitlinie vorgeschriebene Arbeitsablauf in Form von Input-Daten, Arbeitsschritten, Entscheidungsregeln, erforderlichen Ressourcen und Output-Daten in Form eines elektronisch lesbaren Flussdiagramms, beispielsweise in Form eines Petri-Netzes, vorliegt. Allerdings basieren Datenmodelle medizinischer Leitlinien auf Begriffen und Formaten von übergeordneten Instanzen, z.B. medizinischen Fachgesellschaften, von denen sie in einer verallgemeinerten, generischen Form erstellt wurden. Die in einer bestimmten medizinischen Institution vorhandenen Ressourcen, etablierten Arbeitsabläufe usw. können dabei nicht berücksichtigt werden. Das Format, der Grad der Präzisierung und gegebenenfalls die Terminologie eines derartigen maschinenlesbaren Datenmodells medizinischer Leitlinien müssen daher beim Import in ein klinisches Workflow-Management-System einer Institution bisher aufwendig angepasst werden. Prinzipiell ist die Abbildung des realen klinischen Workflows einer gegebenen Institution mit den dort vorhandenen Ressourcen, beispielsweise diagnostischen Geräten, Labor, Personal und allgemein akzeptierten Organisationsregeln, auf ein Datenmodell, das eine vorhandene Workflow-Engine, wie beispielsweise SOARIAN®, verarbeiten kann, heutzutage noch eine weitgehend zeit- und arbeitsaufwendige Consulting-Dienstleistung, die nur in Bruchteilen automatisierbar ist. Speziell bei medizinischen Leitlinien muss die Beachtung und Adaption der verwendeten Terminologien und Formalismen zur Anpassung von Datenbankabfragen, zur Anpassung von Entscheidungskriterien und zur Anpassung der Entscheidungs-unterstützenden Elemente bisher von Hand erledigt werden.
Eine vergleichbare Problematik ergibt sich, wenn in einer Institution, bspw. einer Klinik, ein Teil-Workflow optimiert wird und anschließend auf eine andere Institution übertragen werden soll.

Ausgehend von diesem Stand der Technik besteht die Aufgabe der vorliegenden Erfindung darin, eine Einrichtung anzugeben, die eine Adaption eines maschinenlesbaren Datenmodells medizinischer Leitlinien oder eines vergleichbaren medizinischen Workflows für den Import in ein klinisches Workflow-Management-System einer Institution automatisiert durchführen kann. Mit der vorliegenden Einrichtung soll der Zeit- und Arbeitsaufwand für die elektronische Implementierung insbesondere medizinischer Leitlinien in bestehende Workflow-Management-Systeme unterschiedlicher Institutionen verringert werden.

Die Aufgabe wird mit der Einrichtung gemäß Patentanspruch 1 gelöst. Vorteilhafte Ausgestaltungen der Einrichtung sind Gegenstand der Unteransprüche oder lassen sich aus der nachfolgenden Beschreibung sowie den Ausführungsbeispielen entnehmen.

Die vorliegende Einrichtung umfasst zumindest eine Schnittstelle zum Einlesen des maschinenlesbaren Datenmodells, ein Abbildungssystem bestehend aus einer Arbeitsschritt-Datenbank, die eine hierarchische Gliederung von Arbeitsschritten enthält, und einem Abbildungs-Modul, das Arbeitsschritte des eingelesenen Datenmodells, die zu einer anderen hierarchischen Ebene gehören, als die im klinischen Workflow-Management-System verwendete Ebene, durch Abfrage der Arbeitsschritt-Datenbank auf Arbeitsschritte der hierarchischen Ebene des klinischen Workflow-Management-Systems abbildet, und/oder ein Zuordnungssystem bestehend aus einer Ressourcen-Datenbank, die eine Zuordnung generischer Ressourcen-Bezeichnungen im Datenmodell zu konkreten Ressourcen der Institution enthält, und einem Zuordnungs-Modul, das generische Ressourcen-Bezeichnungen des eingelesenen Datenmodells durch Abfrage der Ressourcen-Datenbank in konkrete Ressourcen der Institution übersetzt, und ein Bereitstellungs-Modul zur Bereitstellung eines nach Bearbeitung durch das Abbildungsund/oder das Zuordnungs-Modul angepassten maschinenlesbaren Datenmodells, das für den Import in das bestehende Workflow-Management-System geeignet ist. Abbildungssystem und Zuordnungssystem können hierbei alternativ oder in Kombination vorliegen.

Im Folgenden wird die vorliegende Einrichtung speziell am Beispiel des Importes medizinischer Leitlinien als Datenmodell beschrieben. Die Ausführungen gelten jedoch selbstverständlich auch für den Import vergleichbarer Datenmodelle in ein klinisches Workflow-Managementsystem.

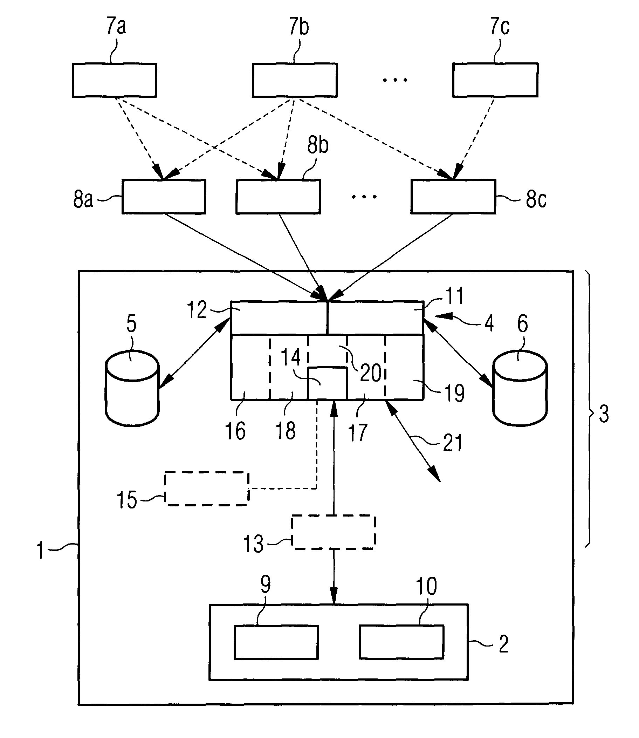

Figur 1 zeigt schematisch den prinzipiellen Aufbau eines Workflow-Management-Systems sowie der vorliegenden Einrichtung. Das Workflow-Management-System 2 ist hierbei zusammen mit der vorliegenden Einrichtung 3 in ein klinisches Informationssystem 1, das in der Regel über ein Computer-Netzwerk verfügt, implementiert. Die vorliegende Einrichtung 3 umfasst hierbei die in diesem Beispiel zu einer Einheit 4 zusammengefassten Module, das Abbildungs-Modul 11, das Zuordnungs-Modul 12 und das Bereitstellungs-Modul 14, sowie die Ressourcen-Datenbank 5 und die Arbeitsschritt-Datenbank 6.

Bei der Implementierung medizinischer Leitlinien, von denen im vorliegenden Ausführungsbeispiel nur beispielhaft die Diabetes-Leitlinie 7a, die Schlaganfall-Leitlinie 7b sowie die Röntgenstrahl-Leitlinie 7c dargestellt sind, können diese Leitlinien 7a bis 7c in unterschiedlichen Leitlinien-Formaten 8a bis 8c vorliegen. Die maschinenlesbaren Datenmodelle dieser Leitlinien-Formate 8a bis 8c werden von der vorliegenden Einrichtung 3 eingelesen, wie dies durch die Pfeile der Fig. 1 verdeutlicht ist. Nach der Analyse der darin verwendeten Begriffe, Arbeitsschritte und Ressourcen wird durch Rückgriff auf die Ressourcen-Datenbank 5 sowie die Arbeitsschritt-Datenbank 6 eine Übersetzung in ein an die Gegebenheiten der vorliegenden Institution angepasstes Datenmodell erstellt und in das Workflow-Management-System 2 implementiert, das den Workflow 9 sowie eine Entscheidungsunterstützung 10 bei der Ausführung der Leitlinien enthält. Die Implementierung in das Workflow-Management-System 2 kann hierbei automatisiert über das optionale, in der Figur daher nur gestrichelt dargestellte, Einbindungs-Modul 13 erfolgen.

Auf weitere optional einsetzbare Module, ein Thessaurus-Modul 16, ein Überprüfungs-Modul 17, ein Scheduling-Modul 18, ein Interaktions-Modul 19 sowie ein Plausibilitäts-Modul 20, die in der Figur ebenfalls lediglich gestrichelt dargestellt sind, wird im Folgenden näher eingegangen.

Die vorliegende Einrichtung 3 berücksichtigt, dass die Beschreibung der Arbeitsschritte in den beiden Datenmodellen, dem der medizinischen Leitlinien und dem des konkreten Workflow-Management-Systems 2 der vorliegenden Institution, in unterschiedlicher Granularität vorliegen können. So kann beispielsweise in einem Modell ein Oberbegriff für den Arbeitsschritt verwendet werden, der im anderen Modell einer Kette von zwei oder mehreren Teil-Arbeitsschritten entspricht. Beispielsweise könnte die Leitlinie an einem Entscheidungsknoten einen Blutwert, etwa den Cholesterinspiegel oder Haematokrit, fordern. Dies entspricht im klinischen Datenmodell den Arbeitsschritten: Blutabnahme bei Patient X + Messwertanforderung des Blutwertes Y im Zentrallabor + Versendung der Blutprobe + Eingabe des Messergebnisses in die EPR (elektronische Patientenakte) + Bewertung des Messergebnisses. Alternativ könnte diesem Arbeitsablauf auch der Arbeitsschritt "Abfrage der EPR nach Vorliegen eines aktuellen Blutwertes Y" vorgeschaltet sein, wobei der erst genannte Arbeitsablauf nur bei Nicht-Vorliegen der Daten in der EPR angestoßen wird. Dieses Beispiel zeigt die unterschiedlichen hierarchischen Ebenen, zu denen die angegebenen Arbeitsschritte gehören können.

Die erforderliche Abbildung der Arbeitsschritte in unterschiedlichen hierarchischen Ebenen der Beschreibung wird bei der vorliegenden Einrichtung 3 durch die Bereitstellung der Arbeitsschritt-Datenbank 6, die die hierarchische Gliederung der Oberbegriffe und zugeordneter Unterbegriffe eines Arbeitsflusses beinhaltet, sowie des Abbildungs-Moduls 11 gelöst, das die Arbeitsschritte des zu importierenden Arbeitsablaufes mit der Arbeitsschritt-Datenbank 6 vergleicht, um die zugehörigen Arbeitsschritte in der für die Institution implementierten Granularität für das angepasste Datenmodell zu verwenden.

In gleicher Weise kann es vorkommen, dass eine medizinische Leitlinie einen Arbeitsfluss mit einer Abfolge von Teil-Arbeitsschritten beschreibt, die in dieser Granularität im Arbeitsablauf der Institution nicht vorgesehen sind. So kann es beispielsweise vorkommen, dass die mit dem Arbeitsschritt verbundene Leistung, beispielsweise eine Magnetresonanz-Aufnahme, in dieser Institution nicht erbracht werden kann. Statt dessen muss der Patient an eine andere Institution überwiesen werden. Für diesen Fall kann die hierarchische Datenbank 6 auch Arbeitsschritte enthalten, die in der Institution nicht durchgeführt werden, um derartige in der Leitlinie aufgeführten Arbeitsschritte automatisch auffinden und der höheren hierarchischen Ebene zuordnen zu können. Die Arbeitsschritt-Datenbank 6 ist dabei vorzugsweise so aufgebaut, dass jedem darin enthaltenen Arbeitsschritt eine Information darüber zugeordnet ist, ob dieser Arbeitsschritt im Workflow der Institution aktiv implementiert ist. Dies kann beispielsweise durch Setzen eines 0/1-Flags bei dem jeweiligen Arbeitsschritt in der Datenbank 6 erfolgen.

Ein wesentlicher Bestandteil der Implementierung eines maschinenlesbaren Datenmodells für die Beschreibung eines Workflows ist die Zuordnung und Bereitstellung von Ressourcen, die für einen Arbeitsschritt erforderlich sind. Die Leitlinien enthalten dabei in der Regel die Rollenverteilung der Zuständigkeit für einzelne Handlungen im Workflow nur implizit und in generischer Art und Weise ("der Arzt", "das Labor"). Weiterhin müssen in der Leitlinie verwendete generische Bezeichnungen für Ressourcen, wie Radiologie oder EKG-Monitoring, auf konkrete Bezeichnungen der Institution, beispielsweise den Namen der Fachärzte, die Stationsbezeichnung, die vorhandene Infrastruktur zum EKG-Monitoring usw., abgebildet werden. Insbesondere muss jedem Arbeitsschritt eine verantwortliche Person zugeordnet sein. Für diese Aufgabe enthält die vorliegende Einrichtung eine Ressourcen-Datenbank 5, in der generischen Rollenbegriffen oder Ressourcen-Bezeichnungen Institutions-spezifische Ressourcen-Bezeichnungen, beispielsweise die Namen realer Abteilungen oder Funktionen der Institution, die Namen von zugeordneten Fachärzten oder von vorhandenen medizinischen Geräten, zugeordnet sind. Das Zuordnungs-Modul 12 übersetzt die Ressourcen-Bezeichnungen der Leitlinien des eingelesenen Datenmodells durch Abfrage der Ressourcen-Datenbank 5 in die konkreten Ressourcen-Bezeichnungen der vorliegenden Institution. Beispielsweise können dem generischen Begriff Radiologie die Namen der Radiologie-Fachärzte, dem Begriff Herzkatheter-Labor die Stationsbezeichnung und der verantwortliche Kardiologe, dem Begriff EKG-Monitoring die Liste der verfügbaren Einrichtungen wie Tele-Monitoring, zentrales Patienten-Monitoring usw. zugeordnet werden.

Die vorliegende Einrichtung 3 umfasst schließlich noch das Bereitstellungs-Modul 14 zur Bereitstellung des nach Durchlaufen des Abbildungs- und Zuordnungs-Moduls angepassten maschinenlesbaren Datenmodells. Dieses Bereitstellungs-Modul 14 speichert das angepasste Datenmodell auf einem geeigneten Datenträger für die nachfolgende Überprüfung, Weiterbearbeitung und/oder Implementierung in das klinische Workflow-Management-System 2. Diese Implementierung erfolgt vorzugsweise über ein weiteres Modul 13 zur Einbindung des angepassten Datenmodells in das Workflow-Management-System 2 der Institution, so dass diese Einbindung ebenfalls automatisiert erfolgen kann.

Vorzugsweise stellt das Bereitstellungs-Modul 14 das angepasste Datenmodell über eine grafische Benutzeroberfläche einer Bedienperson dar, die die korrekte Anpassung vor der endgültigen Implementierung in das Instituts-eigene Workflow-Management-System 2 überprüfen kann. Die Figur 1 zeigt hierzu einen optionalen, mit dem Bereitstellungs-Modul 14 verbundenen Monitor 15 zur Darstellung und zum Vergleich des angepassten Datenmodells mit dem eingelesenen Datenmodell. Die Darstellung erfolgt dabei vorzugsweise derart, dass der generische Workflow der Ausgangs-Leitlinie und der zum Import vorgeschlagene Workflow, vorzugsweise durch gleichzeitige Darstellung einander entsprechender Komponenten beider Workflows am Monitor 15, verglichen werden können. In dem zur Implementierung vorgeschlagenen angepassten Datenmodell bzw. Workflow kann dabei, beispielsweise farblich markiert, hervorgehoben werden, welche der Teilprozesse eindeutig übersetzt werden konnten, bei welchen der Teilprozesse Unklarheiten oder Mehrdeutigkeiten auftreten und welche der Teilprozesse nicht auf das Datenmodell der vorliegenden Institution abgebildet werden konnten, da diese beispielsweise nicht in den entsprechenden Datenbanken aufgefunden werden konnten. Weiterhin umfasst das Bereitstellungs-Modul 14 vorzugsweise eine Schnittstelle zu einem Benutzer-Interface einer Workflow-Generierungs-Applikation, so dass die Bedienperson den vorgeschlagenen Workflow korrigieren bzw. gegebenenfalls vorhandene Lücken im Prozess ergänzen kann.

Die vorliegende Einrichtung 3 weist vorzugsweise auch ein Thessaurus-Modul 16 auf, das in der medizinischen Leitlinie verwendete Begriffe in Institutions-spezifische Begriffe gleicher Bedeutung übersetzt. Dadurch werden eventuell im generischen Datenmodell der medizinischen Leitlinie verwendete Begriffe in die Begriffswelt der Institutions-spezifischen Workflow-Engine übersetzt. Die Übersetzung wird, falls erforderlich, als erster Schritt der Adaption des maschinenlesbaren Datenmodells der Leitlinie durchgeführt. Das Thessaurus-Modul 16 umfasst hierbei vorzugsweise Bezeichnungen aller Komponenten des Workflows, d.h. Bezeichnungen von Arbeitsschritten, Input- und Output-Daten sowie Ressourcen.

In einer Weiterbildung der vorliegenden Einrichtung ist weiterhin ein Interaktions-Modul 19 vorgesehen, das bei Nicht-Auffinden eines gesuchten Arbeitsschrittes im Thessaurus 16 und/oder der Arbeitsschritt-Datenbank 6 eine Anfrage an die Bedienperson stellt, ob dieser gesuchte Begriff in den Thessaurus 16 bzw. die Arbeitsschritt-Datenbank 6 übernommen werden soll. Auf diese Weise lassen sich die entsprechenden Datenbanken jederzeit erweitern. Die Einrichtung umfasst hierzu ein entsprechendes Benutzer-Interface 21 zur Eingabe der neuen Zuordnung.

Anstelle eines direkten Vergleiches oder in Ergänzung zu einem direkten Vergleich zum Abbilden gleichartiger Arbeitsschritte mit unterschiedlichen Bezeichnungen aufeinander kann das Thessaurus-Modul 16 auch eine Identifikation eines geeigneten Arbeitsschrittes oder einer Abfolge von Arbeitsschritten über den Arbeitsschritten in einer Datenbank zugeordnete Input- und Output-Daten vornehmen. So kann beispielsweise anstelle der Identifikation der zur Befundung einer Röntgen-Thorax-Aufnahme in einer Institution notwendigen Arbeitsschritte die in der Leitlinie auftretenden Begriffe für Input- und Output-Daten, z.B. Röntgen-Thorax-Aufnahme als Input und auffälliger Lungenschatten als Output, für die Suche in der Datenbank verwendet werden. Alle Arbeitsschritte in einer sequentiellen Kette zwischen diesem Input und dem Output können dann als der zur Durchführung dieses Teils der Leitlinie notwendige Befund-Workflow implementiert werden.

In einer weiteren Ausgestaltung der vorliegenden Einrichtung 3 ist ein Überprüfungs-Modul 17 vorhanden, das die Leitlinie auf in der Institution nicht vorhandene Ressourcen überprüft und alternative vorhandene Ressourcen und/oder einen Arbeitsablauf für ein Outsourcing der zugehörigen Arbeitsschritte vorschlägt. Dadurch wird die Bedienperson bei der Definition von Ersatzprozessen unterstützt, beispielsweise wenn die Leitlinie zur Diagnose eine Ressource wie ein PET-Gerät fordert, das in der Institution nicht vorhanden ist. Die Einrichtung analysiert Ressourcen-Lücken und schlägt dabei automatisch Alternativen vor, wie beispielsweise die Verwendung alternativer Diagnoseverfahren oder einen Arbeitsablauf für das Outsourcing dieser Untersuchung.

In einer weiteren Ausgestaltung der vorliegenden Einrichtung 3 kann das Überprüfungs-Modul 17 eine automatisierte Hilfestellung zur Implementierung einer definierten Schnittstelle in Fällen bieten, in denen Teilprozesse des klinischen Ablaufes nicht konform zur Leitlinie sind. Insbesondere in kleineren medizinischen Institutionen kann es häufig vorkommen, dass in der Institution nicht alle in der Leitlinie vorgesehenen Arbeitsschritte durchgeführt werden können, da notwendige Ressourcen, beispielsweise ein Facharzt für Kardiologie, ein MR-Gerät usw., fehlen und daher die notwendigen Arbeitsschritte im Datenmodell der Institution nicht vorhanden oder nicht aktivierbar sind. In diesem Fall identifiziert das Überprüfungs-Modul 17 die den fehlenden Arbeitsschritten zugehörigen Input- und Output-Daten und schlägt einen Ersatzprozess, beispielsweise einen Outsource-Prozess vor, mittels dessen die erforderlichen Maßnahmen in einer anderen medizinischen Institution, beispielsweise einer Facharztpraxis oder einer Spezialklinik, durchgeführt werden können. Hierzu ist vorzugsweise zusätzlich eine Benutzer-Schnittstelle 21 mit einer geeigneten Benutzeroberfläche zur Dateneingabe vorgesehen, über die die Bedienperson gegebenenfalls erforderliche Informationen eingeben kann. Derartige Informationen können beispielsweise geeignete Facharztpraxen, die Verantwortlichkeit bei Schnittstellen zwischen den Institutionen, usw. sein. Ein Spezialfall eines derartigen Ersatzprozesses ist der häufige Fall von Leitlinien, bei denen der Patient zwar als erste Anlaufstation den Allgemeinarzt aufsucht, dieser aber erforderliche Ressourcen bzw. die erforderliche Fachkenntnis nicht besitzt, um nach der zutreffenden Leitlinie, beispielsweise für Verdacht auf Schlaganfall, zu handeln. Der Allgemeinarzt wird also bei der Implementierung der Leitlinie einen definierten Ersatzprozess bereits sehr frühzeitig, d.h. bei der Diagnose, dass diese Leitlinie für den betreffenden Patienten zutrifft, in seinen Workflow aufnehmen und den Patienten an die nächste neurologische Fachklinik einweisen. In diesem Sinne ist dann auch diese Leitlinie im Workflow-System des Allgemeinarztes korrekt und Leitlinien-konform implementiert.

In einer weiteren Ausgestaltung der vorliegenden Einrichtung 3 ist ein Scheduling-Modul 18 vorgesehen, das die rechtzeitige Verfügbarkeit von in der Leitlinie angeführten Ressourcen sicherstellt. So kann eine Leitlinie beispielsweise fordern, dass eine Ressource, beispielsweise das Herzkatheter-Labor oder ein MR-Gerät, innerhalb einer Höchstzeitspanne, meist wenige Stunden, zur Verfügung stehen soll. Bei der Implementierung der Leitlinie muss also nicht nur das Vorhandensein der Ressource geprüft, sondern es müssen auch Prozesse implementiert werden, die die rechtzeitige Verfügbarkeit der Ressource garantieren. Das Scheduling-Modul 18 übernimmt diese Aufgabe (Notfall-Scheduling).

Die vorliegende Einrichtung 3 umfasst vorzugsweise weiterhin ein Plausibilitäts-Modul 20, das einen Vergleich von Inputund Output-Daten der Arbeitsschritte sowie der Reihenfolge der Arbeitsschritte des eingelesenen und des angepassten Datenmodells automatisiert durchführt. Auf diese Weise können Unstimmigkeiten erkannt und der entsprechenden Bedienperson während oder nach Durchführung des Anpassungsprozesses mitgeteilt bzw. an einem Bildschirm angezeigt werden.

In einer Ausgestaltung der vorliegenden Einrichtung 3 ist das Überprüfungs-Modul 17 so ausgebildet, dass es ständig oder wiederholt die Verfügbarkeit von Ressourcen prüft und bei dauerhaftem oder temporärem Ausfall von Ressourcen, beispielsweise durch Erkrankung von Mitarbeitern, Ausfall von Geräten oder Schließung von Abteilungen, automatisch die verantwortlichen Personen über davon betroffene Abschnitte der bereits implementierten Leitlinien informiert. Weiterhin kann dieses Modul 17 auch eine gegebenenfalls temporäre Anpassung des Workflows durch Vorschlag von Ersatzprozessen veranlassen. Handelt es sich um temporäre Ausfälle, können die ursprünglichen Fassungen der Leitlinien nach Wiederverfügbarkeit der Ressource automatisch reaktiviert werden. Diese Ausgestaltung der vorliegenden Einrichtung 3 erfordert eine ständige Verbindung mit dem Workflow-Management-System 2, um die letztgenannten Aufgaben erfüllen zu können.

Die vorliegende Einrichtung eignet sich auch zur Überprüfung der Realisierbarkeit und Anwendbarkeit von medizinischen Leitlinien im jeweiligen Workflow-Management-System einer Institution, in vorteilhaften Ausgestaltungen auch dann, wenn die Leitlinien nicht in einem Fremdformat vorliegen. Insbesondere können auch Autoren des Workflow-Systems der Institution prüfen, ob die von ihnen entworfenen bzw. formalisierten Leitlinien im System angewandt werden können.

Mit der vorliegenden Einrichtung, die vorzugsweise auf einem Rechnersystem implementiert ist, lässt sich ein Computergestützter Import von medizinischen Leitlinien in klinische Workflow-Management-Systeme realisieren. Die Einrichtung umfasst Module zur Analyse, Übersetzung und Anpassung von Fremdformaten unter automatischer Berücksichtigung von vorhandenen Ressourcen. Sie ermöglicht die automatische Anpassung von Datenbankabfragen und Entscheidungsregeln an verwendete Terminologie-Systeme und Regelsyntax. Weiterhin lassen sich in vorteilhaften Ausgestaltungen der Einrichtung Ressourcen-Ausfälle automatisch erkennen und betroffene Leitlinien-Abschnitte lokalisieren. Durch die mit der vorliegenden Einrichtung mögliche automatisierte Anpassung maschinenlesbarer Datenmodelle medizinischer Leitlinien lassen sich derartige Leitlinien ohne großen Arbeits- und Zeitaufwand in konkrete Workflow-Management-Systeme unterschiedlicher Institutionen implementieren.

## Patentansprüche

1. Einrichtung zur Adaption eines maschinenlesbaren Datenmodells, insbesondere medizinischer Leitlinien (7a-c), für den Import in ein klinisches Workflow-Management-System (2) einer Institution, mit zumindest
- einer Schnittstelle zum Einlesen des Datenmodells,
- einem Abbildungssystem bestehend aus einer Arbeitsschritt-Datenbank (6), die eine hierarchische Gliederung von Arbeitsschritten enthält, sowie einem Abbildungs-Modul (11), das Arbeitsschritte des eingelesenen Datenmodells, die zu einer anderen hierarchischen Ebene gehören als die im Workflow-Management-System (2) verwendete Ebene, durch Abfrage der Arbeitsschritt-Datenbank (6) auf Arbeitsschritte der hierarchischen Ebene des Workflow-Management-Systems (2) abbildet, und/oder
- einem Zuordnungssystem bestehend aus einer Ressourcen-Datenbank (5), die eine Zuordnung generischer Ressourcen-Bezeichnungen im Datenmodell zu konkreten Ressourcen der Institution enthält, sowie einem Zuordnungs-Modul (12), das generische Ressourcen-Bezeichnungen im eingelesenen Datenmodell durch Abfrage der Ressourcen-Datenbank (5) in konkrete Ressourcen der Institution übersetzt, und
- einem Bereitstellungs-Modul (14) zur Bereitstellung eines nach Bearbeitung durch das Abbildungs- und/oder das Zuordnungs-Modul (11, 12) angepassten maschinenlesbaren Datenmodells.

2. Einrichtung nach Anspruch 1,
**dadurch gekennzeichnet,**
**dass** ein Modul (13) zur Einbindung des angepassten Datenmodells in das Workflow-Management-System (2) der Institution vorhanden ist.

3. Einrichtung nach Anspruch 1 oder 2,
**dadurch gekennzeichnet,**
**dass** ein Thessaurus-Modul (16) vorhanden ist, das im Datenmodell verwendete Begriffe in Institutions-spezifische Begriffe gleicher Bedeutung übersetzt.

4. Einrichtung nach Anspruch 3,
**dadurch gekennzeichnet,**
**dass** das Thessaurus-Modul (16) Arbeitsschritte und/oder Abfolgen von Arbeitsschritten über den Arbeitsschritten in einer Datenbank zugeordnete Input- und Output-Daten identifizieren kann.

5. Einrichtung nach einem der Ansprüche 1 bis 4,
**dadurch gekennzeichnet,**
**dass** die Ressourcen-Datenbank (5) als konkrete Ressourcen der Institution Namen von verantwortlichen Personen und von Geräten enthält.

6. Einrichtung nach einem der Ansprüche 1 bis 5,
**dadurch gekennzeichnet,**
**dass** in der Arbeitsschritt-Datenbank (6) Arbeitsschritte, die in der Institution durchführbar sind, markiert sind.

7. Einrichtung nach einem der Ansprüche 1 bis 6,
**dadurch gekennzeichnet,**
**dass** ein Überprüfungs-Modul (17) vorhanden ist, das das eingelesene Datenmodell auf in der Institution nicht vorhandene Ressourcen überprüft und alternative vorhandene Ressourcen und/oder einen Ablauf für ein Outsourcing zugehöriger Arbeitsschritte vorschlägt.

8. Einrichtung nach Anspruch 7,
**dadurch gekennzeichnet,**
**dass** das Überprüfungs-Modul (17) eine Benutzer-Schnittstelle (21) mit einer geeigneten Benutzeroberfläche zur Dateneingabe umfasst, über die eine Bedienperson Zusatz-Informationen für das Outsourcing eingeben kann.

9. Einrichtung nach Anspruch 7 oder 8,
**dadurch gekennzeichnet,**
**dass** das Überprüfungs-Modul (17) so ausgebildet ist, dass es ständig oder wiederholt die Verfügbarkeit von Ressourcen der Institution prüft und bei Ausfall von Ressourcen automatisch eine Meldung über vom Ausfall betroffene Abschnitte des implementierten Datenmodells erzeugt.

10. Einrichtung nach Anspruch 9,
**dadurch gekennzeichnet,**
**dass** das Überprüfungs-Modul (17) bei Ausfall von Ressourcen automatisch eine zumindest temporäre Anpassung des implementierten Datenmodells durch Vorschlag eines oder mehrerer Ersatzprozesse veranlasst.

11. Einrichtung nach einem der Ansprüche 1 bis 10,
**dadurch gekennzeichnet,**
**dass** ein Scheduling-Modul (18) für die Sicherstellung einer rechtzeitigen Verfügbarkeit von in dem Datenmodell angeführten Ressourcen vorgesehen ist.

12. Einrichtung nach einem der Ansprüche 1 bis 11,
**dadurch gekennzeichnet,**
**dass** ein Plausibilitäts-Modul (20) vorhanden ist, das einen Vergleich von Input- und Output-Daten der Arbeitsschritte sowie der Reihenfolge der Arbeitsschritte des eingelesenen und des angepassten Datenmodells durchführt und bei Abweichungen eine Meldung erzeugt.

13. Einrichtung nach einem der Ansprüche 1 bis 12,
**dadurch gekennzeichnet,**
**dass** ein Interaktions-Modul (19) vorhanden ist, das bei Nicht-Auffinden eines Arbeitsschrittes in der Arbeitsschritt-Datenbank (6) oder einer Bezeichnung im Thessaurus-Modul (16) über eine Benutzerschnittstelle (21) eine Anfrage an eine Bedienperson stellt, ob der nicht aufgefundene Arbeitsschritt in die Arbeitsschritt-Datenbank (6) oder die nicht aufgefundene Bezeichnung in das Thessaurus-Modul (16) übernommen werden soll, und den nicht aufgefundenen Arbeitsschritt oder die nicht aufgefundene Bezeichnung auf Anweisung der Bedienperson übernimmt.

14. Einrichtung nach einem der Ansprüche 1 bis 13,
**dadurch gekennzeichnet,**
**dass** das Bereitstellungs-Modul (14) eine grafische Benutzeroberfläche umfasst, über die das angepasste Datenmodell im Vergleich zum eingelesenen Datenmodell einer Bedienperson darstellbar ist.

15. Einrichtung nach Anspruch 14,
**dadurch gekennzeichnet,**
**dass** das Bereitstellungs-Modul (14) in einer Darstellung des angepassten Datenmodells Elemente graphisch hervorhebt, die eindeutig übersetzt werden konnten und/oder die Unklarheiten oder Mehrdeutigkeiten verursachten und/oder die nicht abgebildet oder übersetzt werden konnten.

16. Einrichtung nach einem der Ansprüche 1 bis 15,
**dadurch gekennzeichnet,**
**dass** das Bereitstellungs-Modul (14) eine Schnittstelle zu einem Benutzer-Interface einer Workflow-Generierungs-Applikation umfasst, über die eine Bedienperson das angepasste Datenmodell korrigieren und/oder ergänzen kann.
